# EUROPÄISCHE PATENTSCHRIFT

(11) **EP 0 812 607 B1**
(45) Veröffentlichungstag und Bekanntmachung des Hinweises auf die Patenterteilung: **11.09.2002**
(21) Anmeldenummer: 97109670.6
(22) Anmeldetag: 13.06.1997
(51) Int. Cl.: B01D 3/00

(54) **Verfahren zur Nachbehandlung von Rohdestillat**
Process for after-treatment of crude distillate
Procédé de traitement ultérieur du distillat brut

(30) Priorität: 14.06.1996 DE 19623864
(43) Veröffentlichungstag der Anmeldung: 17.12.1997
(73) Patentinhaber: Capovilla, Vittorio, Rosa (VI) (IT)
(72) Erfinder: Capovilla, Vittorio, Rosa (VI) (IT)
(74) Vertreter: Schneiders, Josef, Dipl.-Ing.

(56) Entgegenhaltungen:
- DE-A- 2 431 885
- DE-A- 3 828 320
- GB-A- 1 251 800
- US-A- 4 073 955

## Beschreibung

Die Erfindung betrifft ein Verfahren zur Nachbehandlung von Rohdestillat nach der Destillation.

Nach dem eigentlichen Destillationsvorgang liegt das Destillat in Form des sogenannten Rohdestillats bzw. Rohbrands vor. Durch die Wahl des Destillationsverfahrens läßt sich die Zusammensetzung des Rohbrandes in weiten Grenzen beeinflussen.

Ein derartiges Verfahren zur kontinuierlichen Gewinnung von gereinigtem Alkohol, d. h. Ethanol, aus vergorener Maische ist beispielsweise aus der DE 32 41 493 C2 bekannt. Im einzelnen handelt es sich dabei um einen speziellen Destillationsprozeß in Rohbrenn-, Feinbrenn- und Trennkolonnen. Das darin beschriebene Verfahren hat im wesentlichen zum Ziel, die Vorlaufbestandteile vor Erreichen der Feinbrennkolonne abzutrennen.

Aus der DE 38 28 320 C2 ist weiterhin eine Destillationsvorrichtung bekannt, bei der gezielt Schadstoffe während der Gewinnung von Branntwein, insbesondere aus Steinobst, verringert werden sollen. Im einzelnen geht es dabei darum, ein möglichst keinerlei Urethan oder Zyanide enthaltendes Destillat zu gewinnen. Dies geschieht mittels eines Katalysators, an dem mit Schadstoffen angereicherter Lutter anfällt, der zu unterschiedlichen Stellen des Aromators oder direkt zur Maischeblase rückführbar ist.

Die vorbekannten Verfahren und Vorrichtungen verfolgen allesamt den Ansatz, das Destillat, d. h. den Rohbrand, auf möglichst geringe Schadstoffanteile zu optimieren. Neben den Hauptprodukten Ethanol und Kohlendioxyd liefert die Gärung nämlich je nach Ausgangsprodukten ca. 4 - 5 % unterschiedliche Nebenprodukte, wobei neben einer Vielzahl anderer Bestandteile insbesondere Methanol und höhere Alkohole, insbesondere die hauptsächlich aus Pentanolen, Isobutanol, etc. bestehenden sogenannten Fuselöle zu nennen sind.

Angesichts der zum Teil gesundheitsschädigenden Wirkung der Gärungs-Nebenprodukte sind die Maximalkonzentrationen dieser Bestandteile im für Trinkbranntweinzwecke geeigneten Rohsprit gesetzlich festgelegt, beispielsweise darf der Aldehyd-Gehalt höchstens 4 mg/l, der Fuselöl-Gehalt höchstens 5 mg/l, der Säuregrad höchstens 3 mg/l und der Methanol-Gehalt höchstens 1200 - 1500 g/hl r. A. betragen.

Es hat sich nun gezeigt, daß die Einhaltung der gesetzlichen Vorschriften zu einem Rohdestillat führt, welches nach Verdünnung auf Trinkstärke zwar in der Regel einen Branntwein ergibt, welcher ohne unmittelbare gesundheitliche Schäden durch die in ihm enthaltenden Nebenprodukte der Gärung konsumiert werden kann. Man hat allerdings gleichfalls festgestellt, daß selbst ein besonders sorgfältig hergestelltes Rohdestillat, dessen schädliche Inhaltsstoffe weit unterhalb der gesetzlich erlaubten Grenzwerte liegen, höchsten geschmacklichen Qualitätsansprüchen, wie sie an sogenannte Edelbrände gestellt werden, manchmal nicht gerecht werden. Dies liegt zum Teil daran, daß der Gärungsvorgang ein höchst komplexer chemischer Prozeß ist, wobei sich die Zusammensetzung des Ausgangsprodukts nicht zuletzt angesichts der natürlichen Abweichungen der Ausgangsprodukte - wie Früchte und dergleichen - nicht bis in alle Einzelheiten beherrschen läßt.

Die Folge sind nicht beherrschbare Qualitätsschwankungen, die von einer Trübung des Genußerlebnisses bis hin zu körperlichen Beschwerden bei empfindlichen Personen führen können.

Daraus ergibt sich die Aufgabe der Erfindung, ein Verfahren zur Nachbehandlung von Rohdestillat nach der Destillation zur Verfügung zu stellen, welches die geschmackliche Qualität und die Verträglichkeit des Endproduktes durch eine Verminderung der Schadstoffe verbessert.

Zur Lösung dieser Aufgabe schlägt die Erfindung ein Verfahren mit folgenden Verfahrensschritten vor:
- Temperierung des Rohdestillats im geschlossenen Kühlbottich bei Normaldruck auf eine Destillat-Temperatur, die deutlich unterhalb der Siedetemperatur von Ethanol bei Normaldruck liegt,
- Kondensation von Destillatbestandteilen im dampfgefüllten oberen Bereich des Kühlbottichs bei Normaldruck an Kühlflächen, die kälter sind als die Destillat-Temperatur,
- Abzug des Kondensats von den Kühlflächen aus dem Kühlbottich.

Nach dem Stand der Technik ist es üblich, das Rohdestillat nach der Destillation in einen Kühlbottich einzufüllen und vor der Filtration auf eine niedrigere Temperatur zu bringen, so daß z. B. Fuselöle bei der nachfolgenden Filtration aus dem Rohdestillat entfernt werden. Das erfindungsgemäße Verfahren setzt nun dort an, wo das Destillat nach dem Abschluß des Destillationsvorgangs im Kühlbottich auf eine Temperatur heruntergekühlt ist, die in etwa Raumtemperatur, d. h. 20 °C, oder etwas darüber entspricht. Jedenfalls ist die Temperatur dabei deutlich niedriger als die Siedetemperatur des Ethanols, d. h. des Weingeistes. Andernfalls würde der Ethanol-Gehalt kontinuierlich sinken, da unter dem gegebenen Normaldruck, d. h. dem typischen, klimabedingten Luftdruck, sich der Alkoholgehalt des Rohbrandes innerhalb kurzer Zeit verringern würde. Nach dem erfindungsgemäßen Verfahren wird die Temperatur des Rohdestillats in dem Kühlbottich in einem Bereich von etwa 15 °C bis etwa 50°C eingestellt. Dabei bildet sich in dem Raum oberhalb des flüssigen Destillates in dem Kühlbottich eine Dampfphase, in der der Dampfdruck der einzelnen Bestandteile mit der Flüssigkeit im Gleichgewicht steht.

Man hat nun festgestellt, daß die den Geschmack beeinträchtigenden Schadstoffe bei den erfindungsgemäßen Temperatur- und Druckbedingungen offenbar einen höheren Dampfdruck haben als Ethanol. Diesen Umstand macht sich das erfindungsgemäße Verfahren dadurch zunutze, daß innerhalb der Dampfphase Kühlflächen angeordnet sind, die kälter sind als die Destillat-Temperatur. An diesen Kühlflächen kondensieren bevorzugt diese geschmacks-beeinträchtigenden Schadstoffe und können einfach aus dem Kühlbottich abgezogen werden.

Bei dem erfindungsgemäßen Verfahren handelt es sich praktisch um eine quasi-statische - da unter Normalbedingungen - fraktionierte Nachdestillation, durch welche die Qualität des Rohdestillates, selbst bei besonders sorgfältig gebrannten Edelbränden, nochmals gesteigert wird.

Ein bevorzugter Ablauf des erfindungsgemäßen Verfahrens sieht vor, daß die Destillat-Temperatur unter normalem Umgebungsdruck bei 15 - 25 °C erfolgt. Dadurch ist sichergestellt, daß auch bei einer längeren Nachbehandlung praktisch kein Ethanol mit abgezogen wird.

Insbesondere bei der Nachbehandlung von Obstbränden, die sich mitunter durch einen erhöhten Zyanid-Gehalt auszeichnen, kann es von Vorteil sein, daß die Destillat-Temperatur größer ist als 20 °C, bei der die maximale Obergrenze, d. h. die Siedetemperatur von Ethanol (78,32 °C) nicht überschritten wird. Dadurch ist es möglich, Zyanid-Verbindungen, die bei etwa 34 °C in die Dampfphase übergehen, mittels des erfindungsgemäßen Verfahrens aus dem Rohbrand zu entfernen. Es ist offensichtlich, daß dadurch nicht nur die Bekömmlichkeit des Branntweins erhöht wird, sondern auch die gesundheitsschädlichen Nebenwirkungen minimiert werden.

Eine vorteilhafte Weiterbildung des erfindungsgemäßen Verfahrens sieht den weiteren Verfahrensschritt vor, daß Gas in das Rohdestillat eingeblasen wird. Hierzu wird während der Nachbehandlung über in dem mit Rohdestillat gefüllten Teil des Bottichs installierte Düsen bzw. Gasverteiler ein Inert- oder Reaktivgas eingeleitet. Durch die dabei entstehenden Gasblasen wird die Flüssigkeitsoberfläche deutlich vergrößert, so daß die Effizienz des erfindungsgemäßen Verfahrens in Bezug auf die Entfernung der Schadstoffe verbessert wird. Als Gas gelangt bevorzugt Kohlendioxyd oder Stickstoff zum Einsatz; es können jedoch auch andere Gase und Gasgemische verwendet werden.

Eine Vorrichtung zur Durchführung des erfindungsgemäßen Verfahrens sieht vor, daß ein geschlossener Kühlbottich in seinem unteren, mit Rohdestillat befüllbaren Teil eine Temperiervorrichtung aufweist und in dem Raum oberhalb des Destillats separat temperierbare Kühlflächen angebracht sind, die mit einer Kondensat-Abzugsvorrichtung versehen sind.

Der erfindungsgemäß ausgestaltete Kühlbottich weist zwei separat voneinander temperierbare Temperiervorrichtungen auf. Die eine Temperiervorrichtung dient zur Kühlung des flüssigen Rohdestillats. Es ist allerdings' gleichfalls denkbar, bei kalten Umgebungstemperaturen das Destillat auf die gewünschte Temperatur zu erwärmen. In dem Raum oberhalb des Flüssigkeitsspiegels des Destillats, d. h. unterhalb des Deckels des Kühlbottichs, sind unabhängig von der ersten Temperiervorrichtung kühlbare Kühlflächen angebracht. Auf diese Weise lassen sich zwischen dem Destillat und dem im Dampfraum angeordneten Kühlflächen beliebige Temperaturdifferenzen einstellen. Die Kühlflächen können zweckmäßigerweise ebenfalls durch die Oberflächen eines Kühlmantels gebildet werden.

Eine besonders vorteilhafte Ausführungsform der erfindungsgemäßen Vorrichtung sieht vor, daß der Kühlbottich zylindrisch ausgebildet ist und einen nach oben konisch zulaufenden Deckel aufweist, wobei ein Temperiermantel im Mantel und Boden des zylindrischen Teils angeordnet ist und ein Kühimantel im Mantel des konischen Deckels angeordnet ist, dessen konische Innenflächen die Kühlflächen bilden, und als Kondensat-Abzugsvorrichtung im Innern des Deckels eine umlaufende Auffangrinne vorgesehen ist, die mit einer nach außen geführten Kondensat-Abzugsleitung verbunden ist.

In dieser Ausführungsform ergibt sich ein kompaktes Gerät, welches bei gleichbleibender Form sowohl für kleinere als auch größere Füllmengen dimensioniert werden kann.

Durch die Anordnung der Kühlfläche auf der nach oben zulaufenden, konischen Innenfläche des Deckels wird gewährleistet, daß die Kondensat-Tropfen auf der Kühlfläche nach unten ablaufen, wo sie in einer im Innern des Deckels ringsum umlaufenden Kondensat-Sammelrinne gesammelt werden. Die Kondensat-Sammelrinne kann über die Kondensat-Abzugsleitung, die als kleine Öffnung oder als Ablaufrohr ausgebildet sein kann, nach außen hin entleert werden.

Ausführungsbeispiele der erfindungsgemäßen Vorrichtung sind anhand der Zeichnungen näher erläutert. Es zeigen im einzelnen:
- Fig. 1: eine schematische Darstellung einer erfindungsgemäßen Vorrichtung;
- Fig. 2: eine vergrößerte Schnittdarstellung eines Kühlbottichs gemäß Fig. 1;
- Fig. 3: eine perspektivische Ansicht des Kühlbottichs gemäß Fig. 2 mit aufgeklapptem Deckel.

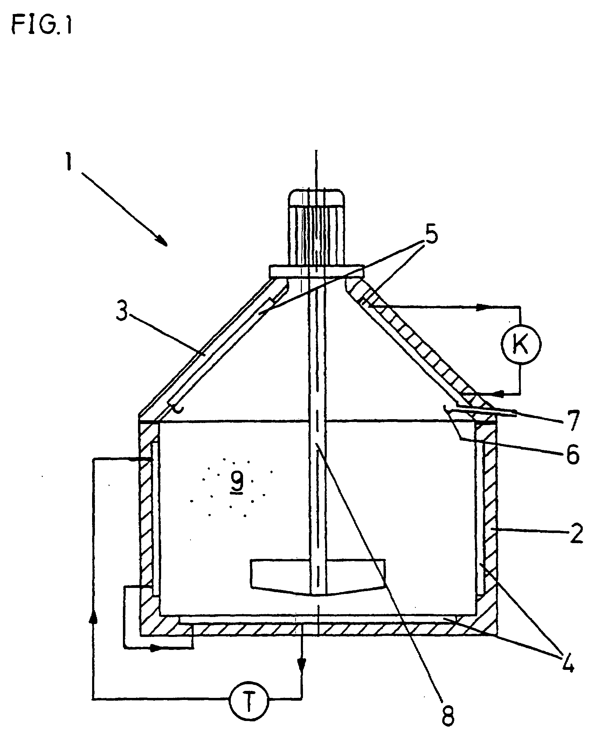

In Fig. 1 ist die als Kühlbottich ausgebildete erfindungsgemäße Vorrichtung als Ganzes mit dem Bezugszeichen 1 versehen. Dieser weist einen zylindrischen, topfförmigen Behälter 2 auf, der oben mit einem nach oben konisch zulaufenden Deckel 3 verschlossen ist. Dieser ist von dem Behälter 2 abnehmbar.

Im Inneren der Mantelfläche sowie im Boden des Behälters 2 ist ein mit einem Kühl- bzw. Heizmedium beaufschlagbarer Temperiermantel 4 angeordnet, der an eine Temperiervorrichtung T angeschlossen ist. Innen in der konischen Mantelfläche des Deckels 3 ist ein mit Kühlmittel beaufschlagbarer Kühlmantel 5 angeordnet, der an einen Kühlvorrichtung K angeschlossen ist, die als Kühlkreislauf ausgebildet ist.

Am unteren Rand des Kühlmantels 5 ist umlaufend eine Kondensat-Auffangrinne 6 angeordnet, die mit einer nach außen geführten Kondensat-Abzugsleitung 7 verbunden ist.

Weiterhin ist in dem Deckel 3 ein motorisiertes Rührwerk 8 angeordnet, welches in den Behälter 2 hineinragt.

Die maximale Füllhöhe des Behälters 2 mit Rohdestillat 9 endet etwa knapp unterhalb seiner Oberkante, wo der Deckel 3 aufgesetzt wird.

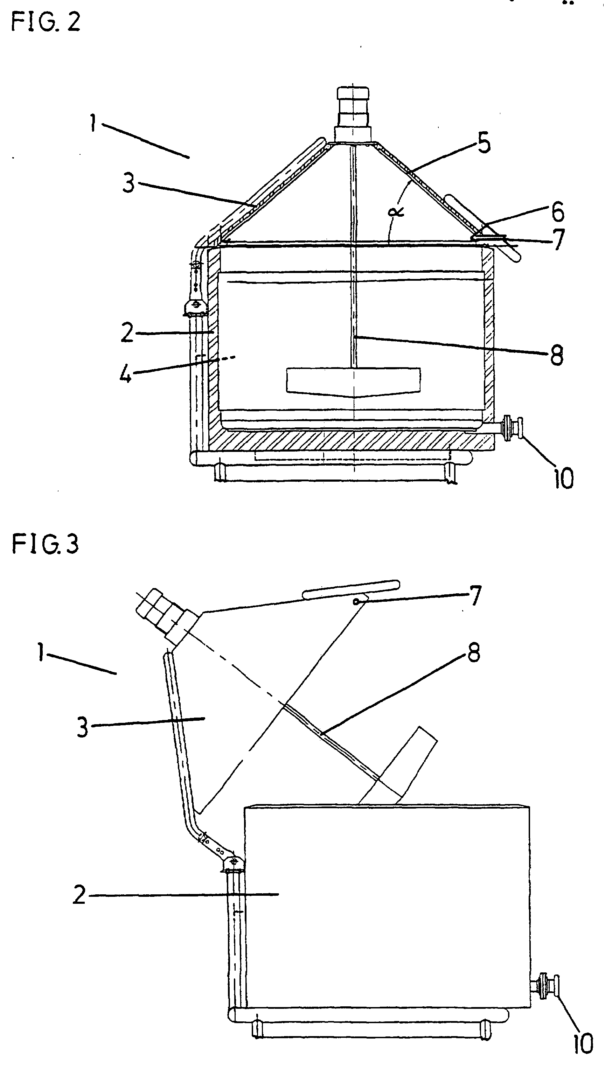

In Fig. 2 und Fig. 3 ist eine praktische Ausführungsform eines Kühlbottichs 1 gemäß Fig. 1 dargestellt. Dabei finden die gleichen Bezugszeichen Verwendung.

Im einzelnen ist deutlich erkennbar, daß der Winkel α des Kühlmantels 5 in dem Deckel 3 hier etwa 40° gegen die Waagerechte beträgt. Dadurch baut die Vorrichtung 1 relativ flach, es ist jedoch immer gewährleistet, daß Kondensat-Tropfen auf dem Kühlmantel 5 in die Kondensat-Auffangrinne 6 ablaufen, ohne in den Behälter 2 zu tropfen. Weiterhin ist an dem Behälter 2 unten ein Ablaufstutzen 10 angeordnet, über den das Rohdestillat 9 nach der Nachbehandlung abgelassen werden kann.

Zur Durchführung des erfindungsgemäßen Verfahrens mit der Vorrichtung gemäß Fig. 1 - 3 wird flüssiges Rohdestillat 9 in den Behälter 2 des Kühlbottichs 1 eingefüllt und der Deckel 3 geschlossen. Mittels der Temperiervorrichtung T wird der Temperiermantel 4 auf eine vorgewählte Temperatur, beispielsweise 20 °C, eingestellt. Mittels der Kühlvorrichtung K wird der Kühlmantel 5 auf eine Temperatur unterhalb der Temperatur des Temperiermantels 4 abgekühlt. Während des gesamten Vorganges wird mittels des Rührwerkes 8, das in dem Behälter 2 befindliche flüssige Rohdestillat 9 in Bewegung gehalten.

In dem nicht mit Destillat gefüllten Raum innerhalb des Deckels 3 bildet sich ein Dampfgleichgewicht aus, welches von der Temperatur des Temperiermantels 4, die mit dem flüssigen Rohdestillat 9 übereinstimmt und dem Umgebungsdruck, d. h. dem Normaldruck, bestimmt wird. Die Temperatur des Rohdestillates 9 wird so gewählt, daß bevorzugt schädliche Inhaltsstoffe in die Dampfphase übergehen, die Siedetemperatur von Ethanol bei Normaldruck (78,32 °C) jedoch nicht überschritten wird. Der Kühlmantel 5 wird soweit abgekühlt, daß an ihm die schädlichen Inhaltsstoffe zu Tropfen kondensieren, die in die Kondensat-Auffangrinne 6 ablaufen und über die Kondensat-Abzugsleitung 7 nach außen abgezogen werden können. Bei diesem Vorgang handelt es sich um einen quasi statischen Prozeß, der annähernd unter Normalbedingungen stattfindet und bei dem praktisch ausschließlich die schädlichen Inhaltsstoffe aus dem Rohdestillat 9 entfernt werden. Dadurch erhält man einen qualitativ äußerst hochwertiges Endprodukt.

## Patentansprüche

1. Verfahren zur Nachbehandlung von Rohdestillat nach der Destillation, **gekennzeichnet durch** die Verfahrensschritte
• Temperierung des Destillats im geschlossenen Kühlbottich bei Normaldruck auf eine Destillat-Temperatur, die unterhalb der Siedetemperatur von Ethanol bei Normaldruck liegt,
• Kondensation von Destillatbestandteilen im dampfgefüllten oberen Bereich des Kühlbottichs bei Normaldruck an Kühlflächen, die kälter sind als die Destillat-Temperatur,
• Abzug des Kondensats von den Kühlflächen aus dem Kühlbottich.

2. Verfahren nach Anspruch 1, **dadurch gekennzeichnet, daß** die Destillat-Temperatur bei Raumtemperatur liegt.

3. Verfahren nach Anspruch 1, **dadurch gekennzeichnet, daß** die Destillat-Temperatur oberhalb von 20 °C und unterhalb der Siedetemperatur von Ethanol (78,32 °C) liegt.

4. Verfahren nach Anspruch 1, **dadurch gekennzeichnet, daß** Gas in das Rohdestillat eingeblasen wird.

5. Verfahren nach Anspruch 4, **dadurch gekennzeichnet, daß** das Gas Kohlendioxyd ist.

6. Vorrichtung zur Durchführung des Verfahrens nach Anspruch 1, **dadurch gekennzeichnet, daß** ein geschlossener Kühlbottich (1) in seinem unteren, mit Rohdestillat (9) befüllbaren Teil (2) eine Temperiervorrichtung (T, 4) aufweist und in dem Raum oberhalb des Destillats (9) separat temperierbare Kühlflächen (K, 5) angebracht sind, die mit einer Kondensat-Abzugsvorrichtung (6, 7) versehen sind.

7. Vorrichtung nach Anspruch 6, **dadurch gekennzeichnet, daß** die Temperiervorrichtung (T, 4) einen Kühlmantel (4) aufweist.

8. Vorrichtung nach Anspruch 6, **dadurch gekennzeichnet, daß** die Kühlflächen einen Kühlmantel (5) aufweisen.

9. Vorrichtung nach Anspruch 6, **dadurch gekennzeichnet, daß** der Kühlbottich (2) zylindrisch ausgebildet ist und einen nach oben konisch zulaufenden Deckel (3) aufweist, wobei ein Temperiermantel (4) im Mantel und Boden des zylindrischen Teils (2) angeordnet ist und ein zweiter Kühlmantel (5) im Mantel des konischen Deckels (3) angeordnet ist, dessen konische Innenflächen die Kühlflächen bilden, und wobei als Kondensat-Abzugsvorrichtung (6, 7) eine im Innern des Deckels (3) umlaufende Auffangrinne (6) vorgesehen ist, die mit einer nach außen geführten Kondensat-Abzugsleitung (7) verbunden ist.

10. Vorrichtung nach Anspruch 6, **dadurch gekennzeichnet, daß** der Kühlbottich (1) eine Gas-Einblasvorrichtung aufweist.

## Claims

1. A process for the post-treatment of crude distillate after distillation, **characterised by** the process steps:
- temperature control of the distillate in a closed cooling vessel at normal pressure to a distillate temperature which is below the boiling temperature of ethanol at normal pressure,
- condensation of distillate constituents in the vapour-filled upper region of the cooling vessel at normal pressure at cooling surfaces which are colder than the distillate temperature, and
- drawing off the condensate from the cooling surfaces out of the cooling vessel.

2. A process according to claim 1 **characterised in that** the distillate temperature is at ambient temperature.

3. A process according to claim 1 **characterised in that** the distillate temperature is above 20°C and below the boiling temperature of ethanol (78.32°C).

4. A process according to claim 1 **characterised in that** gas is blown into the crude distillate.

5. A process according to claim 4 **characterised in that** the gas is carbon dioxide.

6. Apparatus for carrying out the process according to claim 1 **characterised in that** a closed cooling vessel (1) has a temperature control device (T, 4) in its lower part (2) which can be filled with crude distillate (9) and disposed in the space above the distillate (9) are separately temperature-controllable cooling surfaces (K, 5) provided with a condensate draw-off device (6, 7).

7. Apparatus according to claim 6 **characterised in that** the temperature control device (T, 4) has a cooling jacket (4).

8. Apparatus according to claim 6 **characterised in that** the cooling surfaces have a cooling jacket (5).

9. Apparatus according to claim 6 **characterised in that** the cooling vessel (2) is cylindrical and has an upwardly conically converging cover (3), wherein a temperature control jacket (4) is arranged in the peripheral wall part and the bottom of the cylindrical portion (2) and a second cooling jacket (5) is arranged in the peripheral wall part of the conical cover (3), the conical internal surfaces thereof forming the cooling surfaces, and wherein the condensate draw-off device (6, 7) is in the form of a catch channel (6) which extends around the cover (3) in the interior thereof and which communicates with a condensate draw-off conduit (7) which is taken to the exterior.

10. Apparatus according to claim 6 **characterised in that** the cooling vessel (1) has a gas injection device.

## Revendications

1. Procédé pour le traitement ultérieur d'un distillat brut après la distillation, **caractérisé par** les étapes de procédé
• mise à température du distillat dans la cuve de refroidissement fermée à la pression normale à une température de distillat qui se situe en dessous de la température d'ébullition de l'éthanol à la pression normale,
• condensation de composants de distillat dans la zone supérieure remplie de vapeur de la cuve de refroidissement à la pression normale à des faces de refroidissement qui sont plus froides que la température du distillat,
• enlèvement du condensat des faces de refroidissement de la cuve de refroidissement.

2. Procédé selon la revendication 1, **caractérisé en ce que** la température du distillat se situe à la température ambiante.

3. Procédé selon la revendication 1, **caractérisé en ce que** la température du distillat est supérieure à 20°C et inférieure à la température d'ébullition d'éthanol (78,32°C).

4. Procédé selon la revendication 1, **caractérisé en ce que** du gaz est soufflé dans le distillat brut.

5. Procédé selon la revendication 4, **caractérisé en ce que** le gaz est du dioxyde de carbone.

6. Dispositif pour la mise en oeuvre du procédé selon la revendication 1, **caractérisé en ce qu'**une cuve de refroidissement fermée (1) présente dans sa partie inférieure (2) pouvant être remplie de distillat brut (9) un dispositif de mise à température (T, 4) et que sont disposés dans l'espace au-dessus du distillat (9) des faces de refroidissement (K, 5) pouvant être mises à température séparément qui sont pourvues d'un dispositif de retrait de condensat (6, 7).

7. Dispositif selon la revendication 6, **caractérisé en ce que** le dispositif de mise à température (T, 4) présente une enveloppe de refroidissement (4).

8. Dispositif selon la revendication 6, **caractérisé en ce que** les faces de refroidissement présentent une enveloppe de refroidissement (5).

9. Dispositif selon la revendication 6, **caractérisé en ce que** la cuve de refroidissement (2) est réalisée d'une manière cylindrique et présente un couvercle (3) en forme de cône vers le haut, où une enveloppe de mise à température (4) est disposée dans l'enveloppe et le fond de la partie cylindrique (2) et une deuxième enveloppe de refroidissement (5) est disposée dans l'enveloppe du couvercle conique (3) dont les faces intérieures coniques forment les faces de refroidissement et où est prévu comme dispositif de retrait de condensat (6, 7) une rainure collectrice (6) s'étendant tout autour dans l'intérieur du couvercle (3) qui est reliée à un conduit d'évacuation de condensat (7) mené vers l'extérieur.

10. Dispositif selon la revendication 6, **caractérisé en ce que** la cuve de refroidissement (1) présente un dispositif d'insufflation de gaz.
